# EUROPÄISCHE PATENTSCHRIFT

(11) **EP 3 273 071 B1**
(45) Veröffentlichungstag und Bekanntmachung des Hinweises auf die Patenterteilung: **05.08.2020**
(21) Anmeldenummer: 17177758.4
(22) Anmeldetag: 26.06.2017
(51) Int. Cl.: F15B 21/04, F15B 19/00, F01P 5/12

(54) **TEMPERATURERMITTLUNGSVERFAHREN IN EINER HYDRAULIKANORDNUNG**
TEMPERATURE DETERMINATION METHOD IN A HYDRAULIC ASSEMBLY
PROCÉDÉ DE DÉTERMINATION DE LA TEMPÉRATURE DANS UN DISPOSITIF HYDRAULIQUE

(30) Priorität: 19.07.2016 DE 102016113282
(43) Veröffentlichungstag der Anmeldung: 24.01.2018
(73) Patentinhaber: Magna PT B.V. & Co. KG, 74199 Untergruppenbach (DE)
(72) Erfinder: Prost, Jacques, 74074 Heilbronn (DE)
(74) Vertreter: Rausch, Gabriele

(56) Entgegenhaltungen:
- DE-A1- 10 032 906
- DE-A1-102014 114 770
- JP-A- 2002 029 667

## Beschreibung

Die vorliegende Erfindung betrifft ein Verfahren zum Ermitteln der Temperatur eines Fluides in einer Hydraulikanordnung für ein Kraftfahrzeug.

Ferner betrifft die vorliegende Erfindung eine Hydraulikanordnung für ein Kraftfahrzeug, mit einer mittels eines Antriebsmotors angetriebenen Fluidpumpe und mit einer Steuereinrichtung.

Auf dem Gebiet der Hydraulikanordnungen für Kraftfahrzeuge ist es bekannt, eine Pumpe mit einem Nebenantrieb eines Verbrennungsmotors zu verbinden. Ein Druckanschluss der Pumpe ist dabei mit einem Druckregelventil verbunden, mittels dessen ein vorgegebener Leitungsdruck erzeugt wird. Aus diesem Leitungsdruck werden dann mittels geeigneter weiterer Ventile jeweilige Steuerdrücke zum Ansteuern von Aktuatoren und dergleichen abgeleitet.

Ferner sind Hydraulikanordnungen der oben genannten Art bekannt, bei denen eine Aktuatorpumpe einer Pumpenanordnung durch einen Antriebsmotor in Form eines Elektromotors angetrieben ist. Ein Druckanschluss der Pumpe ist hierbei vorzugsweise direkt, das heißt ohne Zwischenschaltung von Druckregel- oder sonstigen Proportionalventilen, mit einem Anschluss eines Aktuators wie einer Kolben/Zylinderanordnung verbunden. Der Druckanschluss ist ferner mit einem Drucksensor verbunden. Durch Einstellen der Drehzahl des Antriebsmotors kann der Fluiddruck des Hydraulikaktuators und damit beispielsweise eine Betätigungskraft zur Betätigung einer Kupplung eines Kraftfahrzeugantriebsstranges oder dergleichen eingestellt werden. Vorzugsweise erfolgt dies über eine Reglung, bei der die Drehzahl in Abhängigkeit von dem Signal des Drucksensors eingestellt wird.

Um bei derartigen "Pumpenaktuatoren" die Regelbarkeit zu verbessern, ist der Druckanschluss der Pumpe vorzugsweise über eine Leckagestelle mit dem Tank verbunden. Diese Leckagestelle kann beispielsweise durch eine Blende realisiert sein.

In vielen Hydraulikanordnungen ist zusätzlich zu Pumpen, die Aktuatoren zugeordnet sind, eine Kühlpumpe vorgesehen. Eine solche Kühlpumpe stellt einen Volumenstrom eines Kühlfluides bereit, das zum Kühlen von Antriebsstrangkomponenten des Kraftfahrzeuges verwendbar ist.

Das in derartigen Hydraulikanordnungen verwendete Fluid hat eine von der Temperatur abhängige Viskosität. Um die Ansteuerbarkeit der Hydraulikanordnung weiter zu verbessern, ist es daher bevorzugt, wenn die Temperatur des Fluides mittels eines Temperatursensors gemessen wird.

Das Dokument DE 10 2012 016 591 B4 offenbart ein Verfahren zum Ermitteln der Temperatur eines Fluides in einer Hydraulikanordnung für ein Kraftfahrzeug, wobei die Hydraulikanordnung eine mittels eines elektrischen Antriebsmotors angetriebene Pumpenaktuatoranordnung und einen mit einem Druckanschluss der Pumpenaktuatoranordnung verbundenen Drucksensor zur Messung des Druckes des Fluides aufweist, wobei die Pumpenanaktuatorordnung über eine Leckagestelle mit einem Tank verbunden ist, und wobei die Temperatur des Fluides auf der Grundlage eines für die Hydraulikanordnung spezifischen Zusammenhanges zwischen einer Zustandsvariablen des Antriebsmotors und der Temperatur des Fluides bei einem vorgegebenen Druck des Fluides ermittelt wird.

Aus dem Dokument DE 197 23 393 A1 ist ein Kraftfahrzeug mit einem Antriebsmotor bekannt, wobei eine Kenngröße eines Aktors und/oder einer Antriebseinheit des Aktors detektierbar ist, wobei eine Steuereinheit mittels dieser Kenngröße eine Betätigung repräsentierende Größe ermittelt.

Ferner offenbart das Dokument DE 100 32 906 A1 eine Steuerungsvorrichtung zur Steuerung wenigstens einer Einrichtung, die wenigstens teilweise im Antriebsstrang eines Kraftfahrzeugs angeordnet werden kann, wobei eine Steuerungsvorrichtung unter vorbestimmten Gegebenheiten mit wenigstens einer Temperaturermittlungseinrichtung in Verbindung steht, wobei diese Temperaturermittlungseinrichtung eine Temperatur einer Einrichtung und/oder eines Mediums ermitteln kann, wobei anhand dieser Temperatur beurteilt werden kann, ob sich die Einrichtung erwärmt hat oder nicht erwärmt hat, wobei die Steuerungsvorrichtung die Ausgangssignale gemäß einer Abkühlungscharakteristik erzeugt, die bewirkt, dass wenigstens ein Kennwert einer Einrichtung verändert wird, so dass sich diese Einrichtung abkühlen kann.

Das Medium, dessen Temperatur ermittelt werden kann, kann Kühlwasser eines Kühlwasserkreislaufes sein, oder Öl eines Ölkreislaufs. Eine Temperaturermittlungseinrichtung zur Berechnung der Temperatur kann Kennfelder oder Kennlinien oder Kennwerte verwenden. Beispielsweise kann die Steuerungsvorrichtung einen elektrischen Strom oder eine elektrische Spannung verwenden.

Aus der JP2002029667A1 ist ein hydraulischer Kreis für einen Aufzug bekannt, der mit Drucksensoren arbeitet und zudem über die Rotationsgeschwindigkeit des elektrischen Motors eine Öltemperatur bestimmt wird.

Vor diesem Hintergrund ist es eine Aufgabe der Erfindung, ein verbessertes Verfahren zum Ermitteln der Temperatur einer Hydraulikanordnung sowie eine Hydraulikanordnung der oben bezeichneten Art anzugeben, die kostengünstig realisierbar ist und die genauer und/oder die genauer und/oder verlässlicher arbeiten kann als der Stand der Technik.

Die obige Aufgabe wird zum einen gelöst durch ein Verfahren zum Ermitteln der Temperatur eines Fluides in einer Hydraulikanordnung für ein Kraftfahrzeug, wobei die Hydraulikanordnung zum automatisierten Betätigen und Kühlen einer Reibkupplung eine mittels eines Antriebsmotors in Form eines Elektromotors angetriebene Aktuatorpumpe und eine mittels eines Antriebsmotors angetriebene Kühlpumpe aufweist, wobei die angetriebene Kühlpumpe der Hydraulikanordnung dazu ausgebildet ist, einen Volumenstrom zum Kühlen wenigstens einer Komponente des Kraftfahrzeuges bereitzustellen, wobei die Temperatur (T) des Fluides auf der Grundlage eines für die Hydraulikanordnung spezifischen Zusammenhanges zwischen wenigstens zwei Zustandsvariablen (n_{K}, PWM; I) des Antriebsmotors (62) der Kühlpumpe (60) und der Temperatur (T) des Fluides ermittelt wird.

Bei dem erfindungsgemäßen Verfahren wird zur Ermittlung der Temperatur ein Zusammenhang zwischen wenigstens zwei Zustandsvariablen eines Antriebsmotors einer Fluidpumpe und der Temperatur des Fluides ermittelt.

Gegenüber einer Lösung, bei der ein Zusammenhang zwischen einer Zustandsvariablen des Antriebsmotors, der Temperatur und dem Druck des Fluides verwendet wird, kann ein Drucksensor eingespart werden.

Zudem ergeben sich bei der erfindungsgemäßen Lösung weniger Änderungen mit der Zeit. Insgesamt ergibt sich folglich eine zuverlässigere Korrelation bzw. ein zuverlässigerer Zusammenhang zwischen den Zustandsvariablen des Antriebsmotors der Fluidpumpe und der Temperatur.

Als Grund hierfür wird angenommen, dass es im Vergleich zu Lösungen des Standes der Technik weniger Störparameter gibt.

Die Aufgabe wird somit vollkommen gelöst.

Gemäß der Erfindung ist der Antriebsmotor ein elektrischer Antriebsmotor, wobei die wenigstens zwei Zustandsvariablen des Antriebsmotors ausgewählt sind aus der folgenden Gruppe von Zustandsvariablen: Stromaufnahme des elektrischen Antriebsmotors, Drehmoment des elektrischen Antriebsmotors, Spannung des elektrischen Antriebsmotors und Drehzahl des elektrischen Antriebsmotors.

Der für die Hydraulikanordnung spezifische Zusammenhang kann folglich beispielsweise zwischen der Spannung des Antriebsmotors und der Drehzahl des Antriebsmotors sowie der Temperatur ermittelt werden, in einem weiteren Beispiel zwischen der Stromaufnahme des elektrischen Antriebsmotors, der Drehzahl des elektrischen Antriebsmotors und der Temperatur, oder zwischen der Stromaufnahme des elektrischen Antriebsmotors, der Spannung des elektrischen Antriebsmotors und der Temperatur. Die Stromaufnahme ist vorzugsweise proportional zu dem Drehmoment, so dass diese beiden Zustandsvariablen äquivalent sind.

Die Fluidpumpe kann eine Druckpumpe sein, die an ihrem Ausgang ein Fluid unter Druck bereitstellt.

Von besonderem Vorzug ist es jedoch, wenn die Fluidpumpe eine Kühlpumpe der Hydraulikanordnung ist, die dazu ausgebildet ist, einen Volumenstrom zum Kühlen wenigstens einer Komponente des Kraftfahrzeuges bereitzustellen.

Die Verwendung eines solchen Zusammenhanges bei einem Antriebsmotor für eine Kühlpumpe hat gegenüber einer Lösung, bei der ein solcher Zusammenhang für den Antriebsmotor einer Aktuatorpumpe bzw. eines Pumpenaktuators verwendet wird, den Vorteil, dass der Zusammenhang weniger lastabhängig ist. Das Fluid wird bei einer Kühlpumpe generell nicht unter einem wesentlichen Druck bereitgestellt. Vielmehr wird eine Drehzahl eines Antriebsmotors dazu verwendet, um beispielsweise einen Volumenstrom einer solchen Kühlpumpe einzustellen. Beispielsweise kann ein hoher Volumenstrom bedarfsweise dann eingestellt werden, wenn eine hohe Kühlleistung erforderlich ist, beispielsweise bei einem Schlupfzustand einer nasslaufenden Lamellenkupplung in einem Antriebsstrang, oder dergleichen.

Andererseits kann ein geringerer Volumenstrom eingestellt werden, wenn die erforderliche Kühlleistung vergleichsweise gering ist.

Das Fluid läuft dabei auf der Druckseite der Kühlpumpe zwar unter Druck, aber im Wesentlichen ohne erheblichen hydraulischen Widerstand. Mit anderen Worten läuft das Fluid nahezu "frei". Demzufolge ergibt sich für eine solche Kühlpumpenanordnung mit einem Antriebsmotor zum Antreiben einer solchen Kühlpumpe eine hohe Temperaturabhängigkeit und Reproduzierbarkeit. Ferner ist die Hysterese im Vergleich zu Lösungen geringer, bei denen ein Zusammenhang zwischen einer Zustandsvariablen eines Antriebsmotors einer Aktuatorpumpe und der Temperatur genutzt wird.

Von besonderem Vorzug ist es ferner, wenn der Volumenstrom des Fluides, das von der Kühlpumpe gefördert wird, durch Einstellen der Drehzahl des Antriebsmotors gesteuert oder geregelt wird.

Sofern als Zustandsvariable die Drehzahl des Antriebsmotors verwendet wird, ist es bevorzugt, wenn der Zusammenhang zwischen Drehzahl und Temperatur für eine oder eine Mehrzahl von vorgegebenen elektrischen Zustandsvariablen des Antriebsmotors ermittelt wird.

Von besonderem Vorzug ist es, wenn der Zusammenhang zwischen der Drehzahl des Antriebsmotors, einer in den Antriebsmotor eingespeisten Spannung und der Temperatur des Fluides besteht.

Mit anderen Worten wird hierbei eine bestimmte elektrische Spannung oder Leistung in den Antriebsmotor eingespeist. Für eine solche vorgegebene elektrische Spannung oder Leistung ergibt sich dann ein zur Temperaturermittlung verwendbarer Zusammenhang zwischen der Temperatur des geförderten Fluides und der Drehzahl des Antriebsmotors, die sich aufgrund der eingespeisten elektrischen Spannung oder Leistung einstellt.

Je höher die Temperatur ist, desto geringer ist die Viskosität. Demzufolge stellt sich für eine vorgegebene eingespeiste elektrische Spannung oder Leistung eine höhere Drehzahl ein als bei niedrigen Fluidtemperaturen, bei denen die Viskosität des Fluides höher ist.

Anstelle einer Verwendung der in den Antriebsmotor eingespeisten Spannung ist es auch möglich, dass ein Zusammenhang zwischen der Drehzahl des Antriebsmotors, einem in den Antriebsmotor eingespeisten Strom und der Temperatur des Fluides besteht.

Der Elektromotor, der die Fluidpumpe antreibt, ist vorzugsweise ein Elektromotor, der mittels einer Brückenschaltung aus Leistungsschaltern angesteuert wird, wobei die Leistungsschalter in ihren jeweiligen Ansteuerungsphasen (abhängig vom Drehwinkel eines Rotors des Elektromotors) mit einem PWM-Signal beaufschlagt werden. Das PWM-Signal ist vorzugsweise zwischen 0 % und 100 % einstellbar. Dieser PWM-Wert entspricht dabei einer eingespeisten elektrischen Leistung bzw. einer eingespeisten elektrischen Spannung des Antriebsmotors der Fluidpumpe.

Die Temperaturerfassung kann dabei relativ hohe Toleranzen aufweisen, beispielsweise ±2,5°C oder vorzugsweise ±5°C oder sogar ±10°C oder mehr. Für Anwendungen in Kraftfahrzeugen, insbesondere in Kupplungs/Getriebe-Anordnungen, ist eine derartige Temperaturermittlung jedoch in der Regel hinreichend.

Demzufolge kann mit dem erfindungsgemäßen Verfahren bzw. mit der erfindungsgemäßen Hydraulikanordnung die Temperatur des Fluides ermittelt werden, ohne hierfür einen separaten Temperatursensor bereitstellen zu müssen. Die Kosten für einen derartigen Temperatursensor sowie die Kosten für die Verkabelung eines derartigen Temperatursensors können folglich eingespart werden. Ferner ergibt sich eine höhere Ausfallsicherheit und ein höherer Wirkungsgrad, da ein elektronisches Bauteil in Form des Temperatursensors eingespart werden kann und nicht montiert werden muss.

Die Komponenten, die mittels Kühlfluid aus einer Kühlpumpe versorgt werden, können beispielsweise Kupplungen (wie z.B. Lamellenkupplungen) beinhalten, oder Lager, Zahnräder etc. Die Komponente kann auch ein elektrischer Antriebsmotor zum Bereitstellen von Antriebsleistung für das Kraftfahrzeug sein. Das Kühlfluid ist vorzugsweise identisch mit einem Hydraulikfluid, das zum Betätigen von Kupplungen verwendet wird, und/oder identisch mit einem Hydraulikfluid, das zum Schmieren von Antriebsstrangkomponenten verwendet wird. Die Kühlpumpe kann folglich auch als Kühl-/Schmierpumpe ausgebildet sein und im Wesentlichen Kühl- und/oder Schmierfunktionen erfüllen.

Generell ist es möglich, den Zusammenhang zwischen Zustandsvariablen und Temperatur für einen bestimmten Typ von Hydraulikanordnung vorzugeben bzw. zu spezifizieren.

Da Hydraulikanordnungen der verwendeten Bauart gewissen Einbautoleranzen und - spielen unterliegen, ist es jedoch bevorzugt, wenn der für die Hydraulikanordnung spezifische Zusammenhang zwischen den wenigstens zwei Zustandsvariablen des Antriebsmotors und der Temperatur des Fluides vor einer ersten Inbetriebnahme der Hydraulikanordnung und/oder im Rahmen einer Wartung der Hydraulikanordnung ermittelt wird.

Da es in der Regel ohnehin notwendig ist, die möglichen Streuungen im Herstellprozess über Grenzlagenteile zu charakterisieren (Axialspiel, Radialspiel, Kopfspiel in der Pumpe und/oder mögliche Einflüsse einer zu großen/kleinen Extrentrizität, um Beispiele zu nennen), kann die bei Inbetriebnahme durchgeführte diesbezügliche Funktionsprüfung auch um den Schritt erweitert werden, den für die bereits hergestellte Hydraulikanordnung spezifischen Zusammenhang von Zustandsvariablen und Temperatur zu ermitteln.

Ferner können sich derartige Toleranzen während des Betriebs der Hydraulikanordnung verändern. Demzufolge kann es bevorzugt sein, diesen Zusammenhang im Rahmen einer Wartung der Hydraulikanordnung zu überprüfen bzw. zu aktualisieren.

Ferner hängt der Zusammenhang in der Regel auch von dem Typ des verwendeten Fluides ab, so dass beispielsweise bei einem Austausch des Fluides für die Hydraulikanordnung der Zusammenhang vorzugsweise neu ermittelt bzw. aktualisiert wird.

Generell ist es möglich, den Zusammenhang für genau einen diskreten Wert der zweiten Zustandsvariablen des Antriebsmotors zu ermitteln und abzuspeichern. Immer dann, wenn dieser diskrete Wert der zweiten Zustandsvariablen angefahren wird, kann dann die Temperatur ermittelt werden.

Von besonderem Vorzug ist es jedoch, wenn der für die Hydraulikanordnung spezifische Zusammenhang zwischen einer ersten Zustandsvariablen der wenigstens zwei Zutandsvariablen und Temperatur des Fluides für eine Mehrzahl von vorgegebenen diskreten Werten der zweiten Zustandsvariablen bei einer ersten Inbetriebnahme der Hydraulikanordnung und/oder im Rahmen einer Wartung der Hydraulikanordnung ermittelt wird.

Bei dieser Ausführungsform erfolgt die Ermittlung dieses Zusammenhanges folglich in Form eines Kennlinienfeldes, das dann in einer Steuereinrichtung abgespeichert werden kann.

Demzufolge kann eine Ermittlung der Temperatur bei verschiedenen Betriebspunkten der Hydraulikanordnung erfolgen, insbesondere bei verschiedenen diskreten Werten der zweiten Zustandsvariablen.

Zur Verbesserung der Ermittlungsgenauigkeit kann es bevorzugt sein, die innerhalb eines vorgegebenen Zeitabschnittes von beispielsweise kleiner einer Minute oder größer einer Millisekunde ermittelten Zusammenhänge bei verschiedenen diskreten Werten der zweiten Zustandsvariablen zu mitteln.

Die vorgegebenen Betriebspunkte können dabei regelmäßig angefahrenen, vorgegebenen Betriebspunkten der Hydraulikanordnung entsprechen, beispielsweise einem Betriebspunkt, bei dem eine Reibkupplung mit einem hohen Kühlfluid-Volumenstrom zur versorgen ist, beispielsweise während eines Schlupfzustandes dieser Reibkupplung. Alternativ ist es möglich, die Temperaturermittlung immer dann durchzuführen, wenn zufällig einer der Mehrzahl von diskreten Werten der zweiten Zustandsvariablen vorliegt, wobei dieses Messprinzip eher zufällig ist.

Alternativ ist es auch möglich, zur Temperaturermittlung einen durch einen diskreten Wert der zweiten Zustandsvariablen vorgegebenen Betriebspunkt gezielt anzufahren.

Die Genauigkeit, mit der die Temperatur durch das erfindungsgemäße Verfahren ermittelt werden kann, kann so gut sein, dass die ermittelte Temperatur in einer Steuereinrichtung zur Ansteuerung der Hydraulikanordnung verwendet wird.

In einer alternativen oder zusätzlichen Ausführungsform kann die ermittelte Temperatur zur Überprüfung der Funktion eines Temperatursensors verwendet werden, der die Temperatur des Fluides misst.

Während bei einer bevorzugten Variante folglich kein Temperatursensor zur Messung der Temperatur des Fluides vorgesehen ist, kann in einer alternativen Ausführungsform ein derartiger Temperatursensor vorgesehen sein, wobei die erfindungsgemäße Temperaturerfassung vorzugsweise erfolgt, um die Funktion des Temperatursensors zu überprüfen, so dass eine gewisse Redundanz der Temperaturerfassung eingerichtet wird.

Wie oben erläutert ist, ist es von besonderem Vorzug, wenn eine Zustandsvariable des Antriebsmotors dessen Drehzahl ist, insbesondere die oben genannte erste Zustandsvariable.

Die Drehzahl des Antriebsmotors ist vorzugsweise jene Zustandsvariable, die auch zur Einstellung eines Kühlfluid-Volumenstromes an dem Druckanschluss der Pumpenanordnung verwendet wird. In der Folge kann hierbei eine höhere Genauigkeit erzielt werden. Ferner ist die Drehzahl des Antriebsmotors bei erfindungsgemäßen Hydraulikanordnungen in der Regel gut verfügbar, da zu diesem Zweck ohnehin ein Drehzahlsensor oder dergleichen vorgesehen ist.

Bei der erfindungsgemäßen Hydraulikanordnung ist es von Vorzug, wenn der Zusammenhang zwischen den wenigstens zwei Zustandsvariablen des Antriebsmotors und der Temperatur des Fluides in Form einer parametrisierten Kennlinie in der Steuereinrichtung abgespeichert ist, nach der Art eines Kennlinienfeldes.

Hierdurch kann die Temperaturermittlung schnell und gezielt erfolgen, indem bei einem vorbestimmten vorgegebenen Betriebspunkt unmittelbar auf die Kennlinie bzw. eine hierzu hinterlegte Tabelle in der Steuereinrichtung zugegriffen wird.

Alternativ zu einer Darstellung einer Kennlinie durch eine Tabelle ist es auch möglich, die Kennlinie als Funktion in der Steuereinrichtung zu beschreiben, so dass der jeweilige Temperaturwert durch Berechnen der Funktionsgleichung ermittelbar ist. Da der Zusammenhang vorzugsweise zumindest abschnittsweise annähernd linear ist, kann die Funktion eine lineare Funktion sein, die beispielsweise durch Annäherungsverfahren an den realen Verlauf des Zusammenhanges angenähert wird, jedenfalls für bestimmte Abschnitte der Kennlinie. Vorzugsweise wird die erfindungsgemäße Hydraulikanordnung bzw. wird das erfindungsgemäße Verfahren in Verbindung mit Getrieben von Kraftfahrzeugen verwendet, insbesondere Getrieben, bei denen Reibkupplungen oder Bremsen durch Hydraulikaktuatoren betätigt werden. Beispielsweise können dies Wandlerautomatikgetriebe, automatisierte Schaltgetriebe, Doppelkupplungsgetriebe oder stufenlose Getriebe (CVT-Getriebe) sein.

Ausführungsbeispiele der Erfindung sind in der Zeichnung dargestellt und werden in der nachfolgenden Beschreibung näher erläutert. Es zeigen:
Figur 1 : eine schematische Darstellung eines Kraftfahrzeug-Antriebsstranges mit einer Ausführungsform einer erfindungsgemäßen Hydraulikanordnung; und
Figur 2 : zwei unterschiedliche hydraulikanordnungs-spezifische Zusammenhänge zwischen Drehzahl eines Antriebsmotors einer Kühlpumpe und Temperatur eines Fluides für unterschiedliche in den Antriebsmotor eingespeiste elektrische Spannungen.

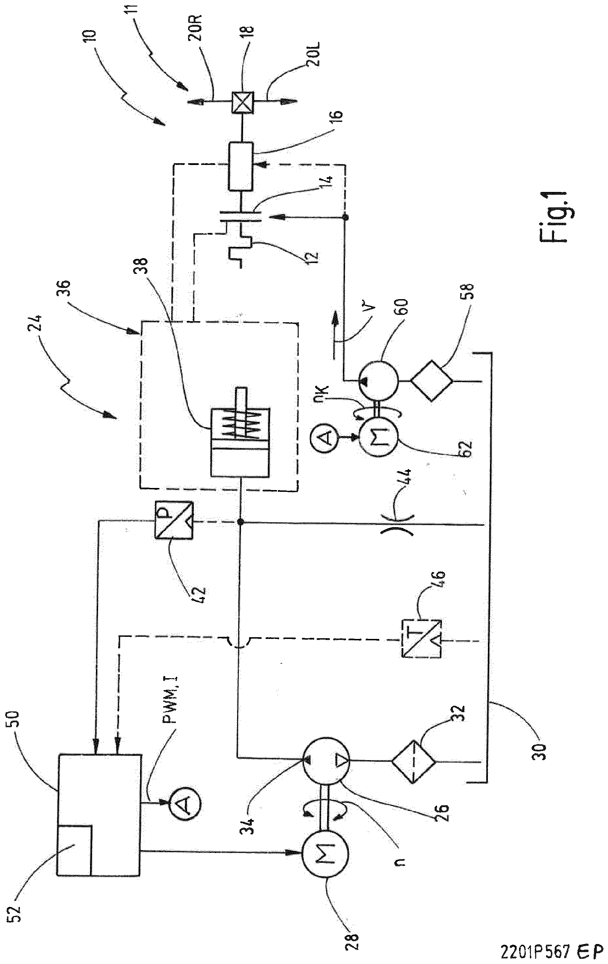

In Fig. 1 ist in schematischer Form ein Kraftfahrzeug 10 mit einem Antriebsstrang 11 dargestellt. Der Antriebsstrang 11 beinhaltet einen Fahrzeugmotor 12, wie einen Verbrennungsmotor, einen Hybrid-Antriebsmotor oder dergleichen. Ferner weist der Antriebsstrang 11 eine Reibkupplung 14 auf, deren Eingang mit dem Fahrzeugmotor 12 verbunden ist und deren Ausgang mit einem Getriebe 16 verbunden ist. Ein Ausgang des Getriebes ist mit einem Differenzial 18 verbunden, mittels dessen Antriebsleistung auf zwei angetriebene Räder 20L, 20R verteilt wird.

Der Antriebsstrang 11 weist ferner eine Hydraulikanordnung 24 auf, die vorliegend zum automatisierten Betätigen der Reibkupplung 14 und zum Kühlen der Reibkupplung 14 verwendet wird. Eine derartige Hydraulikanordnung 24 kann jedoch auch für andere Baugruppen des Antriebsstranges verwendet werden, beispielsweise für Bremsen in Wandler-Automatikgetrieben, für die Verstellung von stufenlosen Getrieben oder dergleichen.

Bei Doppelkupplungsgetrieben weist eine Hydraulikanordnung häufig Komponenten für zwei Reibkupplungen auf, mit denen die Reibkupplungen unabhängig voneinander betätigbar sind, sowie wenigstens eine Kühleinrichtung, mit der die Reibkupplungen kühlbar sind, wie es nachstehend beschrieben wird.

Die Hydraulikanordnung 24 weist eine Aktuatorpumpe 26 auf, die vorliegend als unidirektionale Pumpe ausgebildet ist. Die Aktuatorpumpe 26 wird mittels eines Antriebsmotors 28 in Form eines Elektromotors angetrieben. Die entsprechende Antriebsdrehzahl ist bei n dargestellt. Optional kann die Aktuatorpumpe 26 auch als bidirektionale Pumpe ausgebildet sein, was in Fig. 1 durch ein gestricheltes Symbol in der Aktuatorpumpe 26 angedeutet ist.

Ein Sauganschluss der Aktuatorpumpe 26 ist, vorzugsweise über ein Fluidfilter 32, mit einem Tank 30 verbunden. Der Tank 30 ist ein Bereich, in dem ein Fluid der Hydraulikanordnung nicht unter Druck steht. Unter Tank ist vorliegend folglich jede Art von Reservoir oder Hydraulikanordnungsabschnitt zu verstehen, bei dem das Fluid im Wesentlichen drucklos vorhanden ist.

Ein Druckanschluss 34 der Aktuatorpumpe 26 ist mit einer hydraulischen Last 36 verbunden. Vorliegend beinhaltet die hydraulische Last 36 einen Aktuator 38 in Form einer einfach wirkenden Kolben/Zylinderanordnung. Der hydraulische Aktuator 38 weist einen einzelnen Aktuatoranschluss 40 auf, der direkt mit dem Druckanschluss 34 verbunden ist, das heißt ohne Zwischenschaltung von Druckregel- oder sonstigen Proportionalventilen. Ggf. können in der Verbindung zwischen Druckanschluss 34 und Aktuatoranschluss 40 Wegeventile vorhanden sein.

An die Verbindungsleitung zwischen Druckanschluss 34 und Aktuatoranschluss 40 ist ferner ein Drucksensor 42 angeschlossen, der einen Druck P des Fluides in dieser Leitung misst. Der Druckanschluss 34 ist ferner über eine Blende 44 mit dem Tank 30 verbunden.

Bei 46 ist ein optionaler Temperatursensor gezeigt, der die Temperatur T des Fluides misst, beispielsweise im Bereich des Tanks 30.

Der Antriebsstrang 11 weist ferner eine elektrische bzw. elektronische Steuereinrichtung 50 auf, die mit dem Drucksensor 42 verbunden ist. Ferner ist die Steuereinrichtung 50 dazu ausgelegt, den Antriebsmotor 28 anzusteuern, beispielsweise mittels eines PWM-Signals. In der Steuereinrichtung kann ggf. eine geeignete Leistungsstufe vorhanden sein.

Optional ist die Steuereinrichtung 50 ferner mit dem optionalen Temperatursensor 46 verbunden.

Im Betrieb wird die Reibkupplung 14 betätigt, indem der Druck P durch Einstellen der Drehzahl n des Antriebsmotors 28 der Aktuatorpumpe 26 geregelt wird. Alternativ oder zusätzlich hierzu kann ein Positionssensor in dem Aktuator 38 und/oder der Reibkupplung 14 vorhanden sein.

In der Steuereinrichtung 50 ist ein Steuerabschnitt 52 vorhanden, mittels dessen eine Temperatur T des Fluides aufgrund eines Zusammenhanges zwischen einer Zustandsvariablen eines Antriebsmotors und der Temperatur ermittelbar ist, also unabhängig von dem Temperatursensor 46.

Die Hydraulikanordnung 24 beinhaltet ferner eine Kühlpumpe 60, die beispielsweise über ein Fluidfilter 58 mit dem Tank 30 verbunden ist und aus diesem Fluid ansaugen kann. Die Kühlpumpe 60 ist mittels eines Kühlpumpenmotors 62 antreibbar, und zwar mit einer Drehzahl n_{K}. Der Kühlpumpenmotor 62 ist vorzugsweise ein elektrischer Motor. Der elektrische Motor 62 ist, wie es bei A gezeigt ist, mit der Steuereinrichtung 50 verbunden. Über die Steuereinrichtung 50 kann der elektrische Kühlpumpenmotor 62 angesteuert werden, um eine bestimmte Drehzahl n_{K} einzurichten. Hierzu kann ein Drehzahlsensor vorhanden sein. Die Drehzahl kann jedoch auch aus elektrischen Kenngrößen des Kühlpumpenmotors 62 abgeleitet werden. Das Signal, mittels dessen der Kühlpumpenmotor 62 angesteuert wird, ist vorzugsweise ein PWM-Signal, wie es in Fig. 1 schematisch angedeutet ist. Dem Kühlpumpenmotor 62 ist vorzugsweise eine Leistungselektronik zugeordnet, die beispielsweise eine Brückenschaltung aus Leistungsschaltern beinhaltet, die mittels solcher PWM-Signale aus der Steuereinrichtung 50 angesteuert werden.

Die Kühlpumpe 60 stellt an ihrem Druckanschluss einen Volumenstrom V von Fluid bereit, wobei der Volumenstrom im Wesentlichen drucklos oder mit einem sehr geringen Druck bereitgestellt wird. Der Volumenstrom V wird zur Kühlung und/oder Schmierung von Komponenten des Antriebsstranges 11 verwendet. Insbesondere wird der Volumenstrom V zur Kühlung der Reibkupplung 14 verwendet, bei der es sich beispielsweise um eine Lamellenkupplung handeln kann, die schlupfend betrieben werden kann, wobei während eines solchen Schlupfbetriebes Kühlfluid zuführbar ist, um die dabei entstehende Reibungswärme abführen zu können.

Der Volumenstrom V ist daher vorzugsweise über die Steuereinrichtung 50 einstellbar oder vorgebbar, insbesondere in Abhängigkeit von Zuständen des Antriebstranges 14, also in Abhängigkeit von einem Kühlbedarf.

Bei der Regelung und/oder bei anderen Funktionen der Hydraulikanordnung spielt ferner die Temperatur T des Fluides eine Rolle.

Die Temperatur T kann mittels eines Temperatursensors 46 gemessen werden. Erfindungsgemäß ist jedoch in dem Steuerabschnitt 52 der Steuereinrichtung 50 wenigstens eine Kennlinie in Form von einzelnen Werten in einer Tabelle oder in Form einer mathematischen Funktionsgleichung abgespeichert, über die die Temperatur T des Fluides aus einem Zusammenhang zwischen einer Zustandsvariablen des Kühlpumpenmotors 62 und der Temperatur T des Fluides ermittelt wird, insbesondere für eine vorgegebene Leistung, die in den Antriebsmotor 62 eingespeist wird.

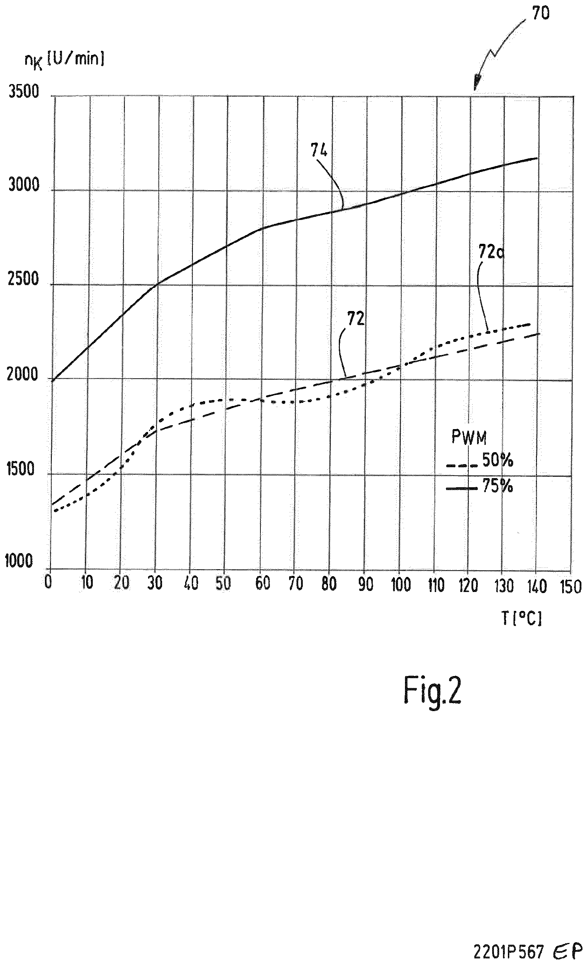

Fig. 2 zeigt ein Diagramm 70 von Drehzahl n_{K} der Kühlpumpe 60 über der Temperatur T des Fluides.

In dem Diagramm 70 der Fig. 2 sind zwei Kennlinien 72, 74 eingezeichnet. Die Kennlinie 72 ergibt sich für eine in den Kühlpumpenmotor 62 eingespeiste elektrische Spannung, die einem PWM-Signal von 50 % entspricht (entsprechend etwa der halben maximalen Nennleistung). Die Kennlinie 74 ergibt sich für eine in den Kühlpumpenmotor 62 eingespeiste elektrische Spannung, die einem PWM-Signal von 75 % ergibt, also etwa drei Viertel der maximalen Nennleistung.

Aus der Kennlinie 72 ergibt sich beispielsweise, dass bei einer eingespeisten elektrischen Spannung mit einem PWM-Signal von 50 % die Temperatur T 80 °C beträgt, wenn die Drehzahl nK2000 UpM beträgt. Mit anderen Worten stellt sich bei dieser Temperatur T von 80 °C genau jene Drehzahl von 2000 UpM ein, und zwar aufgrund der für diese Temperatur T vorhandenen Viskosität des Fluides. Bei höheren Temperaturen ergibt sich eine höhere Drehzahl, bei gleicher eingespeister elektrischer Leistung. Beispielsweise beträgt die Drehzahl bei 120 °C etwa 2200 UpM. Bei niedrigen Temperaturen ergibt sich aufgrund der höheren Viskosität eine geringere Drehzahl. Beispielsweise beträgt die Drehzahl bei 10 °C etwa 1450 UpM.

Aus diesem Hydraulikanordnungs-spezifischen Zusammenhang, der vorzugsweise bei Inbetriebnahme des Fahrzeugs und/oder bei Wartungsarbeiten eingelernt wird, kann die Temperatur T ohne Temperatursensor ermittelt werden.

Das Verfahren sieht dabei vor, für einen Zeitpunkt, bei dem die eingespeiste elektrische Spannung einen PWM-Signal von 50 % entspricht, die Drehzahl n_{K} abzufragen. Wenn die Drehzahl beispielsweise 2000 UpM beträgt, kann auf eine Temperatur T von etwa 80 °C geschlossen werden.

Wie oben erwähnt, muss die Genauigkeit der Temperaturumfassung in dem vorliegenden Umfeld nicht besonders hoch sein. Für die üblichen Anwendungen in der Steuereinrichtung 50 genügen Temperaturermittlungswerte von ± 10 °C.

Demzufolge ist der Temperatursensor 46 für die Funktion der Steuereinrichtung 50 nicht unbedingt notwendig und kann folglich eingespart werden. Alternativ hierzu kann der Temperatursensor 46 vorgesehen sein, wobei die Temperaturermittlungsfunktion über die Kennlinie bzw. über die Tabelle 72, 74 in der Steuereinrichtung 50 dazu genutzt werden kann, um die Funktion des Temperatursensors 46 zu überprüfen, und zwar aus Redundanzgründen.

Der Zusammenhang zwischen den Zustandsvariablen des Antriebsmotors und der Temperatur ist in der Regel aufgrund der verschiedenen Toleranzen der verwendeten Baugruppen in der Hydraulikanordnung für jede Hydraulikanordnung spezifisch.

Eine Zustandsvariable kann eine elektrische Größe des Antriebsmotors sein, weitere mögliche Zustandsvariablen sind das Drehmoment oder die Drehzahl n_{K} des Antriebsmotors. Ein Kennlinienfeld kann durch eine Mehrzahl von Kennlinien gebildet sein, die jeweils eine Relation zwischen Drehzahl n_{K} und der Temperatur T angeben. Der Betriebspunkt bzw. Parameter für diese Kennlinie ist in diesem Fall eine elektrische Größe des Antriebsmotors. Alternativ ist es auch möglich, eine oder mehrere Kennlinien zwischen einer elektrischen Größe des Antriebsmotors und der Temperatur zu bilden, wobei dann als Parameter bzw. für verschiedene Betriebspunkte die Drehzahl des Antriebsmotors herangezogen wird.

Bei 72a ist eine Kennlinie von Drehzahl n_{K} über der Temperatur T gezeigt, die ebenfalls für ein PWM-Signal von 50 % gilt, jedoch eine andere Hydraulikanordnung betrifft, bei der beispielsweise ein anderes Hydraulikfluid verwendet wird, oder eine Kühlpumpe mit einer aufgrund von Toleranzen unterschiedlichen Charakteristik, etc.

## Patentansprüche

1. Verfahren zum Ermitteln der Temperatur eines Fluides in einer Hydraulikanordnung (24) für ein Kraftfahrzeug (10), wobei die Hydraulikanordnung (24) zum automatisierten Betätigen und Kühlen einer Reibkupplung (14) eine mittels eines Antriebsmotors (28) in Form eines Elektromotors angetriebene Aktuatorpumpe (26) und eine mittels eines Antriebsmotors (62) angetriebene Kühlpumpe (60) aufweist, wobei die angetriebene Kühlpumpe (60) der Hydraulikanordnung (24) dazu ausgebildet ist, einen Volumenstrom (V) zum Kühlen wenigstens einer Komponente (14; 16) des Kraftfahrzeuges bereitzustellen,
wobei die Temperatur (T) des Fluides auf der Grundlage eines für die Hydraulikanordnung (24) spezifischen Zusammenhanges (72; 74) zwischen wenigstens zwei Zustandsvariablen (n_{K}, PWM; I) des Antriebsmotors (62) der Kühlpumpe (60) und der Temperatur (T) des Fluides ermittelt wird.

2. Verfahren nach Anspruch 1, wobei der Antriebsmotor der Kühlpumpe (60) ein elektrischer Antriebsmotor (62) ist und wobei die wenigstens zwei Zustandsvariablen (n_{K}, PWM; I) des Antriebsmotors (62) der Kuhlpumpe (60) ausgewählt sind aus der folgenden Gruppe von Zustandsvariablen: Stromaufnahme (I) des elektrischen Antriebsmotors, Spannung (PWM) des elektrischen Antriebsmotors und Drehzahl (n_{K}) des elektrischen Antriebsmotors.

3. Verfahren nach Anspruch 1, wobei der durch die Kühlpumpe (60) geförderte Volumenstrom (V) durch Einstellen der Drehzahl (n_{K}) des Antriebsmotors (62) der Kühlpumpe (60) eingestellt wird.

4. Verfahren nach einem der Ansprüche 1 - 3, wobei der Zusammenhang (72; 74) zwischen der Drehzahl (n_{K}) des Antriebsmotors (62) der Kühlpumpe (60), einer in den Antriebsmotor der Kühlpumpe (60) eingespeisten Spannung (PWM)und der Temperatur (T) des Fluides besteht.

5. Verfahren nach einem der Ansprüche 1 - 4, wobei ein für die Hydraulikanordnung (24) spezifischer Zusammenhang (72; 74) zwischen einer ersten Zustandsvariablen (n_{K}) der wenigstens zwei Zustandsvariablen (n_{K}, PWM; I) und der Temperatur (T) des Fluides für eine Mehrzahl von vorgegebenen diskreten Werten der zweiten Zustandsvariablen (PWM) bei einer ersten Inbetriebnahme der Hydraulikanordnung (24) und/oder im Rahmen einer Wartung der Hydraulikanordnung (24) ermittelt wird.

6. Verfahren nach einem der Ansprüche 1 - 5, wobei die ermittelte Temperatur (T) in einer Steuereinrichtung (50) zur Ansteuerung der Hydraulikanordnung (24) verwendet wird.

7. Verfahren nach einem der Ansprüche 1 - 6, wobei die ermittelte Temperatur (T) zur Überprüfung der Funktion eines Temperatursensors (46) verwendet wird, der die Temperatur (T) des Fluides misst.

8. Verfahren nach einem der Ansprüche 1 - 7, wobei eine Zustandsvariable des Antriebsmotors (62) der Kühlpumpe (60) dessen Drehzahl (n_{K}) ist.

9. Hydraulikanordnung (24) zum automatisierten Betätigen und Kühlen einer Reibkupplung (14) für ein Kraftfahrzeug (10), mit einer mittels eines Antriebsmotors (28) in Form eines Elektromotors angetriebenen Aktuatorpumpe (26), einer mittels eine Antriebsmotors (62) angetriebenen Kühlpumpe (60) und mit einer Steuereinrichtung (50), wobei die angetriebenen Kühlpumpe (60) dazu ausgebildet ist, einen Volumenstrom (V) zum Kühlen wenigstens einer Komponente (14, 16) des Kraftfahrzeugs bereitzustellen, und wobei die Steuereinrichtung (50) zur Durchführung des Verfahrens nach einem der Ansprüche 1 - 6 ausgebildet und eingerichtet ist, wobei die Steuereinrichtung (50) die Temperatur (T) des Fluides auf der Grundlage eines für die Hydraulikanordnung (24) spezifischen Zusammenhanges (72; 74) zwischen wenigstens zwei Zustandsvariablen n_{K} ; PWM; I) des Antriebsmotors (62) der Kühlpumpe (60) und der Temperatur (T) des Fluides ermittelt.

10. Hydraulikanordnung nach Anspruch 9, wobei der Zusammenhang (72; 74) zwischen den wenigstens zwei Zustandsvariablen (n_{K}, PWM; I) des Antriebsmotors (62) der Kühlpumpe (60) und der Temperatur (T) des Fluides in Form einer parametrisierten Kennlinie in der Steuereinrichtung (50) abgespeichert ist.

## Claims

1. Method for determining the temperature of a fluid in a hydraulic assembly (24) for a motor vehicle (10), the hydraulic assembly (24) having, for the automated actuation and cooling of a friction clutch (14), an actuator pump (26) which is driven by means of a drive motor (28) in the form of an electric motor and a cooling pump (60) which is driven by means of a drive motor (62), the driven cooling pump (60) of the hydraulic assembly (24) being configured to provide a volumetric flow (V) for cooling at least one component (14; 16) of the motor vehicle, the temperature (T) of the fluid being determined on the basis of a relationship (72; 74) between at least two state variables (n_{K}, PWM; I) of the drive motor (62) of the cooling pump (60) and the temperature (T) of the fluid, which relationship (72; 74) is specific for the hydraulic assembly (24).

2. Method according to Claim 1, the drive motor of the cooling pump (60) being an electric drive motor (62), and the at least two state variables (n_{K}, PWM; I) of the drive motor (62) of the cooling pump (60) being selected from the following group of state variables: current consumption (I) of the electric drive motor, voltage (PWM) of the electric drive motor, and rotational speed (n_{K}) of the electric drive motor.

3. Method according to Claim 1, the volumetric flow (V) which is conveyed by way of the cooling pump (60) being set by way of setting of the rotational speed (n_{K}) of the drive motor (62) of the cooling pump (60).

4. Method according to one of Claims 1 to 3, the relationship (72; 74) existing between the rotational speed (n_{K}) of the drive motor (62) of the cooling pump (60), a voltage (PWM) which is fed into the drive motor of the cooling pump (60), and the temperature (T) of the fluid.

5. Method according to one of Claims 1 to 4, a relationship (72; 74) between a first state variable (n_{K}) of the at least two state variables (n_{K}, PWM; I) and the temperature (T) of the fluid, which relationship (72; 74) is specific for the hydraulic assembly (24), being determined for a plurality of prescribed discrete values of the second state variables (PWM) in the case of initial operation of the hydraulic assembly (24) and/or within the context of maintenance of the hydraulic assembly (24).

6. Method according to one of Claims 1 to 5, the determined temperature (T) being used in a control device (50) for the actuation of the hydraulic assembly (24).

7. Method according to one of Claims 1 to 6, the determined temperature (T) being used to check the function of a temperature sensor (46) which measures the temperature (T) of the fluid.

8. Method according to one of Claims 1 to 7, a state variable of the drive motor (62) of the cooling pump (60) being the rotational speed (n_{K}) thereof.

9. Hydraulic assembly (24) for the automated actuation and cooling of a friction clutch (14) for a motor vehicle (10), with an actuator pump (26) which is driven by means of a drive motor (28) in the form of an electric motor, a cooling pump (60) which is driven by means of a drive motor (62), and with a control device (50), the driven cooling pump (60) being configured to provide a volumetric flow (V) for cooling at least one component (14, 16) of the motor vehicle, and the control device (50) being configured and set up to carry out the method according to one of Claims 1 to 6, the control device (50) determining the temperature (T) of the fluid on the basis of a relationship (72; 74) between at least two state variables (n_{K}; PWM; I) of the drive motor (62) of the cooling pump (60) and the temperature (T) of the fluid, which relationship (72; 74) is specific for the hydraulic assembly (24).

10. Hydraulic assembly according to Claim 9, the relationship (72; 74) between the at least two state variables (n_{K}, PWM; I) of the drive motor (62) of the cooling pump (60) and the temperature (T) of the fluid being stored in the form of a parameterized characteristic curve in the control device (50).

## Revendications

1. Procédé de détermination de la température d'un fluide dans un dispositif hydraulique (24) pour un véhicule automobile (10), dans lequel, pour l'actionnement et le refroidissement automatisés d'un embrayage à friction (14), le dispositif hydraulique présente une pompe à actionneur (26) entraînée au moyen d'un moteur d'entraînement (28) sous la forme d'un moteur électrique et une pompe de refroidissement (60) entraînée au moyen d'un moteur d'entraînement (62), la pompe de refroidissement (60) entraînée du dispositif hydraulique (24) étant réalisée pour fournir un débit volumétrique (V) pour refroidir au moins un composant (14; 16) du véhicule automobile,
dans lequel la température (T) du fluide est déterminée sur la base d'une relation (72 ; 74) spécifique au dispositif hydraulique (24) entre au moins deux variables d'état (n_{K}, PWM ; I) du moteur d'entraînement (62) de la pompe de refroidissement (60) et la température (T) du fluide.

2. Procédé selon la revendication 1, dans lequel le moteur d'entraînement de la pompe de refroidissement (60) est un moteur d'entraînement électrique (62), et dans lequel les au moins deux variables d'état (n_{K}, PWM ; I) du moteur d'entraînement (62) de la pompe de refroidissement (60) sont sélectionnées dans le groupe suivant de variables d'état : le courant absorbé (I) du moteur d'entraînement électrique, la tension (PWM) du moteur d'entraînement électrique et le régime (n_{K}) du moteur d'entraînement électrique.

3. Procédé selon la revendication 1, dans lequel le débit volumétrique débité par la pompe de refroidissement (60) (V) est réglé par un réglage du régime (n_{K}) du moteur d'entraînement (62) de la pompe de refroidissement (60).

4. Procédé selon l'une quelconque des revendications 1 à 3, dans lequel la relation (72 ; 74) existe entre le régime (n_{K}) du moteur d'entraînement (62) de la pompe de refroidissement (60), une tension (PWM) fournie au moteur d'entraînement de la pompe de refroidissement (60) et la température (T) du fluide.

5. Procédé selon l'une quelconque des revendications 1 à 4, dans lequel une relation (72 ; 74) spécifique au dispositif hydraulique (24) entre une première variable d'état (n_{K}) des au moins deux variables d'état (n_{K}, PWM ; I) et la température (T) du fluide est déterminée pour une pluralité de valeurs discrètes prédéfinies de la deuxième variable d'état (PWM) lors d'une première mise en service du dispositif hydraulique (24) et/ou dans le cadre d'une maintenance du dispositif hydraulique (24).

6. Procédé selon l'une quelconque des revendications 1 à 5, dans lequel la température déterminée (T) est utilisée dans un dispositif de commande (50) pour piloter le dispositif hydraulique (24).

7. Procédé selon l'une quelconque des revendications 1 à 6, dans lequel la température déterminée (T) est utilisée pour vérifier la fonction d'un capteur de température (46) qui mesure la température (T) du fluide.

8. Procédé selon l'une quelconque des revendications 1 à 7, dans lequel une variable d'état du moteur d'entraînement (62) de la pompe de refroidissement (60) est le régime (n_{K}) de celle-ci.

9. Ensemble hydraulique (24) permettant un actionnement et refroidissement automatisés d'un embrayage à friction (14) pour un véhicule automobile (10), comprenant une pompe à actionneur (26) entraînée au moyen d'un moteur d'entraînement (28) sous la forme d'un moteur électrique et une pompe de refroidissement (60) entraînée au moyen d'un moteur d'entraînement (62), et comprenant un dispositif de commande (50), dans lequel la pompe de refroidissement (60) entraînée est réalisée pour fournir un débit volumétrique (V) pour refroidir au moins un composant (14 ; 16) du véhicule automobile, et dans lequel le dispositif de commande (50) est réalisé et aménagé pour effectuer le procédé selon l'une quelconque des revendications 1 à 6, le dispositif de commande (50) déterminant la température (T) du fluide sur la base d'une relation (72 ; 74) spécifique au dispositif hydraulique (24) entre au moins deux variables d'état (n_{K}, PWM ; I) du moteur d'entraînement (62) de la pompe de refroidissement (60) et la température (T) du fluide.

10. Dispositif hydraulique selon la revendication 9, dans lequel la relation (72 ; 74) entre les au moins deux variables d'état (n_{K}, PWM ; I) du moteur d'entraînement (62) de la pompe de refroidissement (60) et la température (T) du fluide est mémorisée dans le dispositif de commande (50) sous la forme d'une caractéristique paramétrée.
